# EUROPÄISCHE PATENTSCHRIFT

(11) **EP 2 496 347 B1**
(45) Veröffentlichungstag und Bekanntmachung des Hinweises auf die Patenterteilung: **10.12.2014**
(21) Anmeldenummer: 10773060.8
(22) Anmeldetag: 28.10.2010
(51) Int. Cl.: B01J 23/745, B01J 23/78, B01J 37/08, B01J 37/16, C07C 1/04

(54) **EISENHALTIGER HETEROGENKATALYSATOR UND VERFAHREN ZUR HERSTELLUNG VON OLEFINEN DURCH UMSETZUNG VON KOHLENMONOXID MIT WASSERSTOFF**
FERROUS HETEROGENEOUS CATALYST AND METHOD FOR PRODUCING OLEFINS BY CONVERTING CARBON MONOXIDE WITH HYDROGEN
CATALYSEUR HÉTÉROGÈNE CONTENANT DU FER ET PROCÉDÉ DE FABRICATION D'OLÉFINES PAR RÉACTION DE MONOXYDE DE CARBONE AVEC DE L'HYDROGÈNE

(30) Priorität: 06.11.2009 EP 09175218
(43) Veröffentlichungstag der Anmeldung: 12.09.2012
(73) Patentinhaber: BASF SE, 67056 Ludwigshafen (DE)
(72) Erfinder: STEINER, Jochen, 64625 Bensheim (DE); BAY, Kerem, 67063 Ludwigshafen (DE); BÖHLING, Ralf, 64653 Lorsch (DE); SCHWAB, Ekkehard, 67434 Neustadt (DE)
(86) Internationale Anmeldenummer: PCT/EP2010/066394
(87) Internationale Veröffentlichungsnummer: WO 2011/054738

(56) Entgegenhaltungen:
- WO-A2-2009/013174
- DE-C- 763 688
- AMARA D ET AL: "Synthesis and characterization of Fe and Fe3O4 nanoparticles by thermal decomposition of triiron dodecacarbonyl", COLLOIDS AND SURFACES. A, PHYSICACHEMICAL AND ENGINEERING ASPECTS, ELSEVIER, AMSTERDAM, NL, Bd. 339, Nr. 1-3, 1. Mai 2009 (2009-05-01) , Seiten 106-110, XP026076575, ISSN: 0927-7757, DOI: DOI:10.1016/J.COLSURFA.2009.02.003 [gefunden am 2009-02-14]
- K.Y.PARK ET AL.: "In situ deposition of iron nanoparticles on transmission electron microscopy grid in furnace aerosol reactor", J. MATER. RES., Bd. 18, Nr. 10, Oktober 2003 (2003-10), Seiten 2285-2287, XP002616116,

## Beschreibung

Die vorliegende Erfindung betrifft einen eisenhaltigen Heterogenkatalysator, ein Verfahren zu seiner Herstellung und ein Verfahren zur Herstellung von Olefinen durch Umsetzung von Kohlenmonoxid mit Wasserstoff in Gegenwart des eisenhaltigen Heterogenkatalysators.

Es ist bekannt, dass niedrigere Olefine aus Kohlenmonoxid (CO) und Wasserstoff (H₂) an Metallkatalysatoren, z. B. Eisen- oder Kobalt-Katalysatoren, hergestellt werden können. Als Katalysatorvorläufer werden üblicherweise Eisenoxide eingesetzt. Solche Katalysatoren sind z. B. in US 4,544,674, US 5,100,856, US 5,118,715, US 5,248,701, US 2004/0127582 A1, H.P. Withers et al., Ind. Eng. Chem. Res. 1990, 29, Seiten 1807 bis 1814, und M.E. Dry et al., Stud. Surf. Sci. Catal., Vol. 152, 2004, Seiten 533 bis 600, beschrieben.

Diese Umsetzung wird auch Fischer-Tropsch-Synthese genannt.

Herkömmliche Verfahren zur Fischer-Tropsch-Synthese produzieren Kohlenwasserstoffe in einem breiten Bereich der Produktverteilung.
Grundsätzlich kann dieser Bereich der Produktverteilung durch die sog. Anderson-Schulz-Flory-Verteilung charakterisiert werden. Vergl. auch: M. Janardanarao, Ind. Eng. Chem. Res. 1990, 29, Seiten 1735-53.

Ebenso ist bekannt, dass die Zusammensetzung der beim Fischer-Tropsch-Prozess gebildeten Kohlenwasserstoffe durch die Wahl der eingesetzten Katalysatoren, der Reaktortypen und der Reaktionsbedingungen stark beeinflusst werden kann.

Z. B. ist bekannt, dass die Produktverteilung durch Anwendung von hohen Temperaturen in Gegenwart modifizierter Eisenkatalysatoren in Richtung niedrigere Olefine verschoben werden kann: B. Büssemeier et al., Hydrocarbon Processing, Nov. 1976, Seiten 105 bis 112.
Hauptproblem ist hier die Bildung großer Mengen an unerwünschtem Methan (CH₄). Darüber hinaus sind die erforderlichen Eisenoxide als Ausgangsstoff für den Katalysator schwierig zu reduzieren.

DE 28 22 656 A1 (Inst. Fr. du Petrole) offenbart ein Fischer-Tropsch-Verfahren, wobei man den Katalysator durch Niederschlagen eines metallorganischen Eisen- und/oder Kobalt- und/oder Nickel-Aggregats auf einem anorganischen Träger erhält. Das Niederschlagen des Aggregats auf dem Träger wird durch Imprägnieren des Trägers mit einer Lösung des Aggregats bewirkt. Nach diesem Verfahren sollen selektiv C2-C4-Olefine ("niedere Olefine") und nur geringe Mengen an Methan entstehen. Der Hauptnachteil dieser Katalysatoren besteht darin, dass die aktiven Katalysatorbestandteile unter den Reaktionsbedingungen flüchtig sein können, was einen Metallverlust bedeutet, und dass sie toxisch sind.

DE 29 19 921 A1 (Vielstich et al.) beschreibt ein weiteres Fischer-Tropsch-Verfahren, in dem man Katalysatoren einsetzt, die als wesentliche Katalysatorkomponente polykristalline Eisenwhisker enthalten. Diese Eisenwhisker werden durch thermische Zersetzung von Eisenpentacarbonyl im magnetischen Feld erhalten. Die Eisenwhisker werden bevorzugt als Pellets eingesetzt. Gemäß der Lehre dieser DE-Schrift werden unter polykristallinen Whiskern feine Eisenfäden mit mikroskopisch kleinen Einkristallbereichen verstanden (Seite 5, 3. Absatz). Die fadenförmigen Primärpartikel resultieren in ihrer Form aus dem Wachstum im magnetischen Feld. Die Fäden haben eine Länge von z. B. 0,06 bis 1 mm.
Die beiden Bilder in ,Fachberichte für Oberflächentechnik, Juli/August 1970, Seite 146, zeigen SEM-Aufnahmen von solchem Carbonyleisenpulver mit fadenförmigen Primärpartikeln.
In ,Fachberichte für Oberflächentechnik, Juli/August 1970, Seiten 145 bis 150, werden diese Eisenwhisker auch als Metallhaare beschrieben, die aus einem Kristallwachstum vom Metall in Fadenform, entgegen einem normalen Kristallwachstum, resultieren (Seite 145, 2. Absatz). In den polykristallinen Eisenwhiskem beträgt das Verhältnis von Länge zu Durchmesser z. B. ≥ 10.
Solche polykristallinen Eisenwhisker sind auch beschrieben in H.G.F. Wilsdorf et al., Z. Metallkde. 69 (11), 1978, Seiten 701 bis 705.

DE 25 07 647 A1 (Kölbel et al.) beschreibt zur Herstellung von Kohlenwasserstoffen und sauerstoffhaltigen Verbindungen aus CO und H₂ die Verwendung von Katalysatoren die Mangan und optional Eisen enthalten.

US 2,417,164 (Standard Oil Comp.) betrifft Verfahren zur Synthese von flüssigen Kohlenwasserstoffen aus CO und H₂ in Gegenwart von Metallkatalysatoren, darunter Carbonyleisenpulver.

WO 07/060186 A1 (BASF AG) lehrt Verfahren zur Herstellung von Olefinen aus Synthesegas unter Einsatz von Fischer-Tropsch-Katalysatoren in einer Reaktionskolonne.

WO 09/013174 A2 (BASF SE) betrifft ein Verfahren zur Herstellung von kurzkettigen, gasförmigen Olefinen durch Umsetzung von Kohlenmonoxid mit Wasserstoff in Gegenwart eines eisenhaltigen Heterogenkatalysators, wobei man als Katalysator Carbonyleisenpulver mit sphärischen Primärpartikeln einsetzt.

Die EP-Patentanmeldung Nr. 08164085.6 (BASF SE) vom 10.09.08 beschreibt ein integriertes Verfahren, wobei in einer Anlage A reines Carbonyleisenpulver (CEP) durch Zersetzung von reinem Eisenpentacarbonyl (EPC) hergestellt wird, bei der Zersetzung des EPC freiwerdendes Kohlenmonoxid (CO) zur Herstellung von weiterem CEP aus Eisen in Anlage A eingesetzt wird oder einer verbundenen Anlage B zur Herstellung von Synthesegas zugeführt wird oder einer verbundenen Anlage C zur Herstellung von Kohlenwasserstoffen aus Synthesegas zugeführt wird,
und man das in Anlage A hergestellte CEP als Katalysator oder Katalysatorkomponente in einer verbundenen Anlage C zur Herstellung von Kohlenwasserstoffen aus Synthesegas aus Anlage B einsetzt.

Zwei parallele europäische Patentanmeldungen mit gleichem Anmeldetag (alle BASF SE) betreffen bestimmte eisenhaltige Heterogenkatalysatoren und ihre Verwendung in Verfahren zur Herstellung von Olefinen durch Umsetzung von Kohlenmonoxid mit Wasserstoff.

Der vorliegenden Erfindung lag die Aufgabe zugrunde, unter Umgehung von Nachteilen des Stands der Technik, einen verbesserten Katalysator und ein verbessertes wirtschaftliches Verfahren zur Herstellung von Olefinen aufzufinden. Das Verfahren sollte insbesondere möglichst selektiv niedere Olefine (z. B. C2-C6 - Olefine, besonders C2-C4 - Olefine), besonders Ethen, Propen und 1-Buten liefern, bei gleichzeitig möglichst geringem Anfall von Methan, Kohlenstoffdioxid, Alkanen (z. B. C2-C6 - Alkanen, besonders C2-C4 - Alkanen) und höheren Kohlenwasserstoffen, also Kohlenwasserstoffen mit z. B. sieben oder mehr C-Atomen (C7+ Fraktion), besonders fünf oder mehr C-Atomen (C5+ Fraktion). Bestandteile des Katalysators sollten unter den Reaktionsbedingungen nicht flüchtig sein.
Der Katalysator sollte eine verbesserte Standzeit und erhöhte mechanische Stabilität aufweisen. Die erhöhte Stabilität ist insbesondere vorteilhaft bei Einsatz des Katalysators in einer Wirbelschicht oder in Slurryreaktoren oder auch in Blasensäulen.

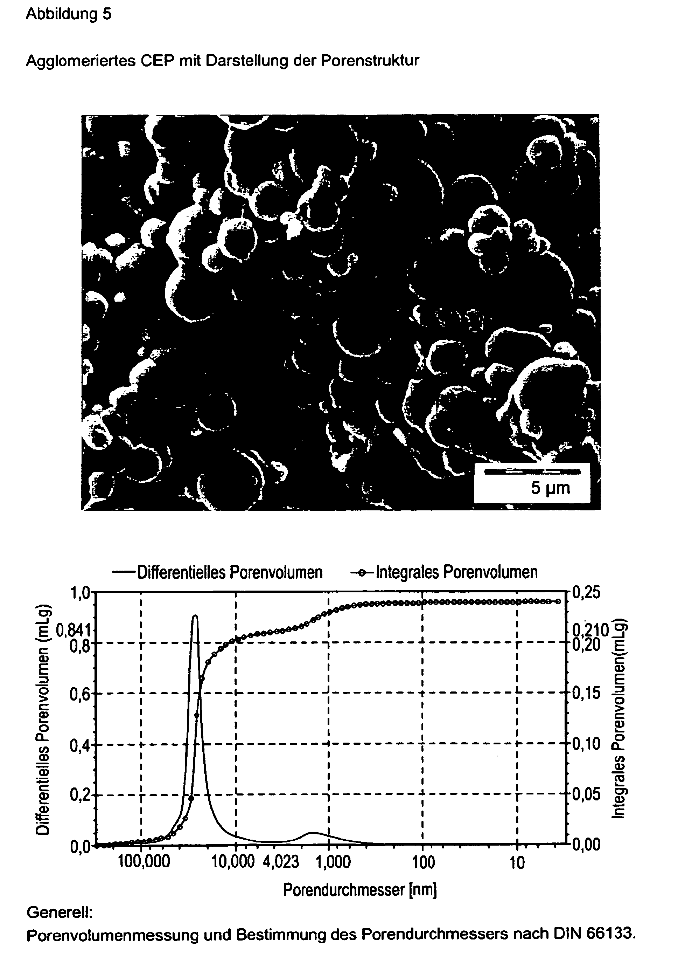

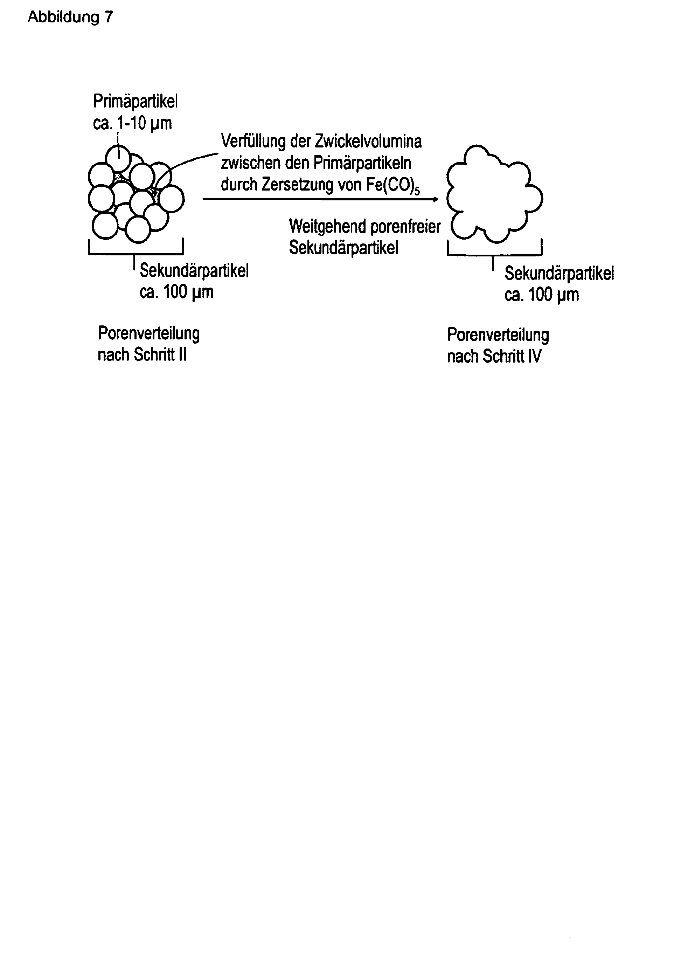

Erfindungsgemäß wurden u. a. folgende Aspekte erkannt:
Die im Schritt II unter zumindest teilweiser Agglomerierung entstehenden metallischen Sekundärpartikel, besonders in einer wirbelfähigen Fraktion mit Partikeldurchmessern im Bereich von 10 bis 250 µm (siehe unten), sind aufgrund ihrer chemischen Zusammensetzung ideale Katalysator-Prekursoren für die Synthese niederer Olefine aus CO-reichen Synthesegasen. Zusätzlich vorteilhaft ist die geringe Oberfläche der Partikel, die bevorzugt unter 2 m²/g liegt (siehe unten).
Insbesondere von Vorteil ist der geringe Sauerstoffgehalt der metallischen Sekundärpartikel, wodurch eine Reduktion - und somit Aktivierung des Katalysators - sehr vereinfacht ist.
Aufgrund der Herstellungsweise enthalten die Sekundärpartikel Zwickelporen (intrapartikuläre Poren = Poren zwischen den sphärischen Primärpartikeln; siehe Abbildung 5 und 7), die nachteilige physikalische Eigenschaften unter den Synthesebedingungen der niederen Kohlenwasserstoffe (KW) zeigen:
   1) In den Poren können sich Koksablagerungen bilden, die zu einer mechanischen Sprengung der Partikel führen (negativ für Standzeit, Austrag von Feinanteil aus Wirbelschicht)
   2) Die Poren begünstigen die Bildung von unerwünschten langkettigen KW
   3) Die Poren begünstigen die Hydrierung von Olefinen

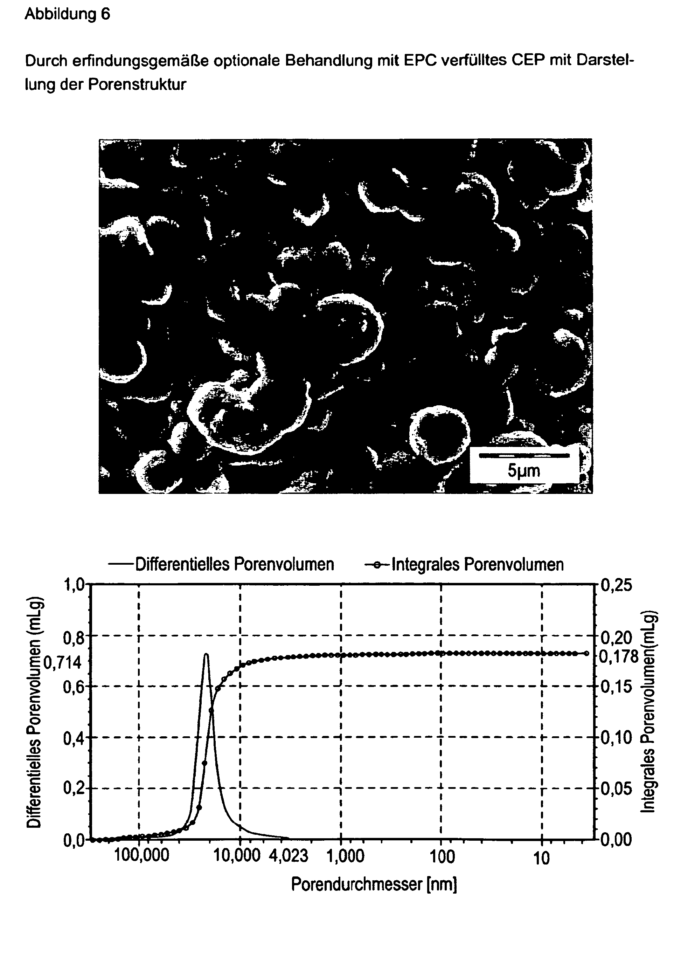

Die Agglomerate (= Sekundärpartikel) werden erfindungsgemäß in einem der oben beschriebenen Reduktion nachgeschalteten Schritt mit Fe(CO)₅ in Kontakt gebracht, und die Poren, besonders durch Kondensation/Flutung, mit Fe(CO)₅ gefüllt. Eine anschließende thermische Zersetzung des EPC führt zu zumindest überwiegend porenund hohlraumfreien Sekundärpartikeln, die die in den o. g. Punkten 1 - 3 gezeigten negativen Eigenschaften nicht mehr besitzen und somit sowohl die absolute Ausbeute an Olefinen, als auch die Katalysatorstandzeit signifikant erhöhen (chemische bzw. mechanische Aspekte, siehe Abbildung 6 und 7). Darüber hinaus wird durch die Verfüllung der Poren die mechanische Stabilität der Sekundärpartikel erhöht.

Demgemäß wurde ein eisenhaltiger Heterogenkatalysator und ein Verfahren zu seiner Herstellung gefunden, welches dadurch gekennzeichnet ist, dass es folgende Schritte umfasst:
I. Thermische Zersetzung von gasförmigem Eisenpentacarbonyl unter Erhalt von Carbonyleisenpulver mit sphärischen Primärpartikeln,
II. Behandlung von in Schritt I erhaltenem Carbonyleisenpulver mit Wasserstoff, wobei die metallischen sphärischen Primärpartikel zumindest teilweise agglomerieren,
III. In Kontakt bringen der Agglomerate (= Sekundärpartikel) mit Eisenpentacarbonyl,
IV. Thermische Zersetzung des in Schritt III aufgebrachten Eisenpentacarbonyls unter Erhalt von zumindest überwiegend poren- und hohlraumfreien Sekundärpartikeln.

Weiter wurde demgemäß ein Verfahren zur Herstellung von Olefinen durch Umsetzung von Kohlenmonoxid mit Wasserstoff in Gegenwart eines Katalysators gefunden, welches dadurch gekennzeichnet ist, dass man als Katalysator den o.g. eisenhaltigen Heterogenkatalysator einsetzt.

Der Anteil an im Schritt I erhaltenen sphärischen Primärpartikeln im Carbonyleisenpulver beträgt bevorzugt > 90 Gew.-%, besonders > 95 Gew.-%, ganz besonders > 98 Gew.-%.

Die im Schritt I erhaltenen sphärischen Primärpartikel weisen bevorzugt einen Durchmesser im Bereich von 0,01 bis 50 µm, besonders im Bereich von 0,1 bis 20 µm, ganz besonders im Bereich von 0,5 bis 15 µm, weiter besonders im Bereich von 0,7 bis 10 µm, weiter besonders im Bereich von 1 bis 10 µm, auf.

Der Eisengehalt der sphärischen Primärpartikel beträgt bevorzugt > 97 Gew.-%, besonders ≥ 99 Gew.-%, insbesondere ≥ 99,5 Gew.-%.
Das Eisen liegt bevorzugt in seiner thermodynamisch stabilsten Modifikation (alpha-Eisen) vor.

Bevorzugt sind die sphärischen Primärpartikel frei von Poren.

Das Carbonyleisenpulver zeichnet sich im Besonderen dadurch aus, dass es neben den sphärischen Primärpartikeln keine fadenförmigen Primärpartikel, insbesondere nicht die in DE 29 19 921 A1 und ,Fachberichte für Oberflächentechnik, Juli/August 1970, Seiten 145 bis 150, (siehe oben) offenbarten Eisenwhisker, enthält.

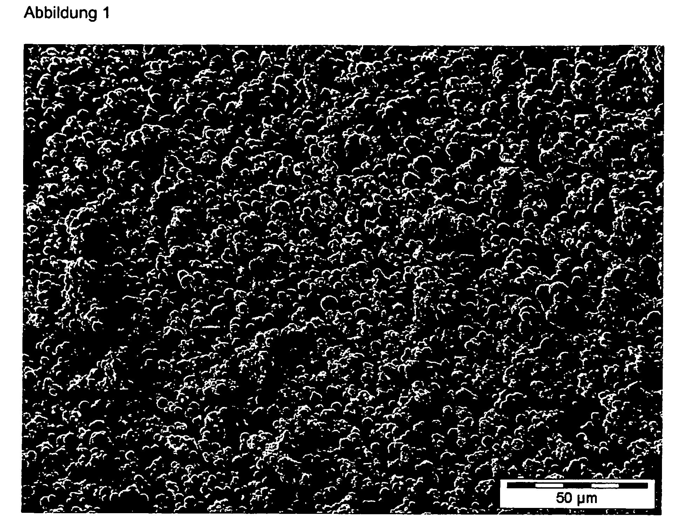

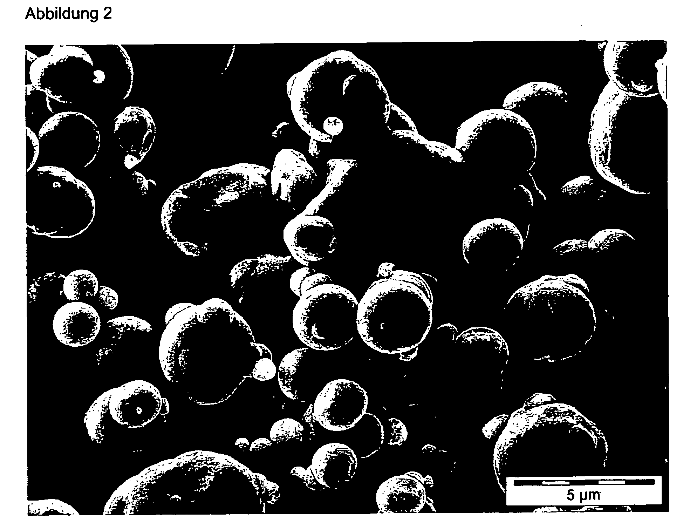

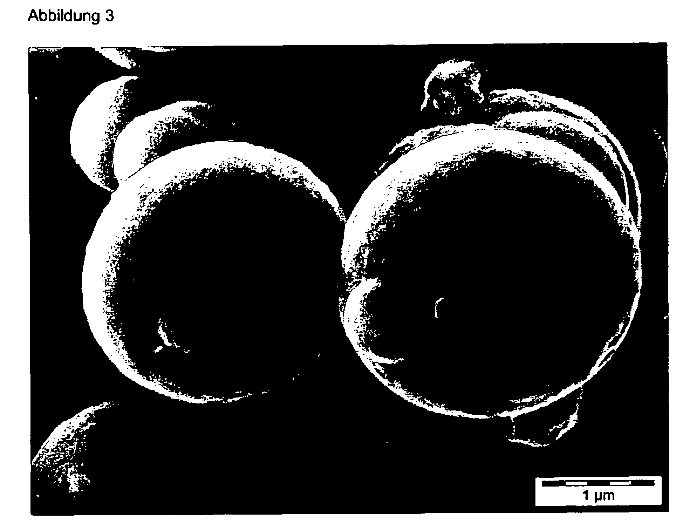

Die Abbildungen 1 bis 3 zeigen SEM-Aufnahmen von bevorzugt eingesetztem Carbonyleisenpulver mit sphärischen Primärpartikeln vor der Wasserstoffbehandlung gemäß Schritt II.

Im erfindungsgemäßen Verfahren einsetzbares Carbonyleisenpulver mit sphärischen Primärpartikeln ist z. B. unter der Bezeichnung "Carbonyleisenpulver CN" von BASF AG bzw. jetzt BASF SE, D-67056 Ludwigshafen, erhältlich.

Das Carbonyleisenpulver mit sphärischen Primärpartikeln wird durch thermische Zersetzung von gasförmigem Eisenpentacarbonyl (Fe[CO]₅), welches besonders durch Destillation zuvor aufgereinigt wurde, erhalten.

Das im Schritt I erhaltene Produkt wird in Schritt II mit Wasserstoff behandelt.
Diese Behandlung der Primärpartikel mit Wasserstoff erfolgt bevorzugt bei einer Temperatur im Bereich von 300 bis 600 °C. Durch diese Behandlung wird der Restgehalt an Kohlenstoff, Stickstoff und auch Sauerstoff im CEP erniedrigt. (DE 528 463 C1, 1927). Hierbei werden die sphärischen Primärpartikel zumindest teilweise, z. B. zu 25 bis 95 Gew.-%, agglomeriert.

Die im Schritt II unter zumindest teilweiser Agglomerierung entstehenden metallischen Sekundärpartikel weisen bevorzugt Partikeldurchmesser im Bereich von 10 bis 250 µm, besonders bevorzugt zwischen 50 und 150 µm, auf. Solche wirbelfähigen Partikelfraktionen können durch entsprechendes Sieben erhalten werden.
In Schritt II erfolgt die Ausbildung von metallischen Sekundärpartikeln mit BET-Oberflächen (DIN ISO 9277) von bevorzugt kleiner 2 m²/g, insbesondere von 0,2 bis 1,9 m²/g.

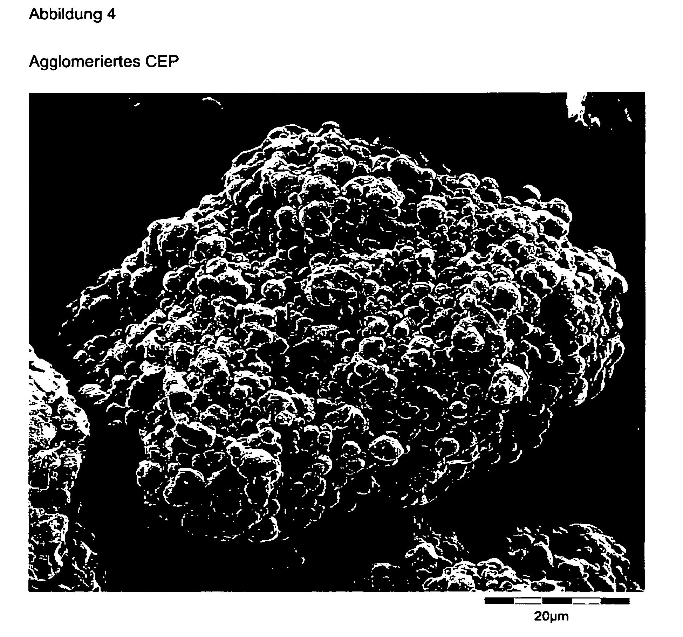

Abbildung 4 und 5 zeigen beispielhaft nach der Wasserstoffbehandlung erhaltene Agglomerate.

In Schritt III werden die Agglomerate bevorzugt mit flüssigem oder gasförmigem Eisenpentacarbonyl in Kontakt gebracht. Besonders bevorzugt ist flüssiges Eisenpentacarbonyl.
Dazu werden die metallischen Sekundärpartikel z. B. in einen mit Argon inertisierten Behälter eingefüllt und bei erhöhter Temperatur, wie z. B. 70 bis 150 °C, insbesondere z. B. bei einer Behälter-Innentemperatur von 105 °C, getrocknet.
Danach wird Eisenpentacarbonyl portionsweise (z. B. 5 Vol.% bezogen auf die Menge an Carbonyleisenpulver) z. B. durch ein Einleitungsrohr flüssig zudosiert.

Das alternative In-Kontakt-bringen mit gasförmigem Eisenpentacarbonyl kann z. B. in einer Wirbelschicht erfolgen, besonders bei einer Temperatur im Bereich von 120 bis 175 °C. Es erfolgt bevorzugt bei einem EPC-Partialdruck (absolut) im Bereich von 0,7 bis 1 bar.

In Schritt IV erfolgt die thermische Zersetzung von Eisenpentacarbonyl bevorzugt bei einer Temperatur im Bereich von 150 bis 350 °C, besonders im Bereich von 150 bis 200 °C.
Z. B. wird das Gefäß, in dem sich das Material aus Schritt III befindet, auf eine Innentemperatur im Bereich von bevorzugt 150 bis 180 °C geheizt und die Zersetzungsreaktion des aufgebrachten EPCs bevorzugt mit einem IR-Spektrometer verfolgt. Hat der CO-Gehalt des Abgases sein Maximum überschritten, wird das Gefäß wieder auf z. B. 105 °C abgekühlt.

Je nach gewünschtem Verfüllungsgrad der Poren wird die Prozedur der beiden Schritte III und IV wiederholt.

Im Schritt IV werden überwiegend poren- und hohlraumfreie Sekundärpartikel erhalten. Die in Schritt II erhaltenen Sekundärpartikel weisen Zwickelporen zwischen den sphärischen Primärpartikeln auf (Porendurchmesser insbesondere < 4000 nm). Die Zwickelporen, insbesondere die Zwickelporen mit Durchmessern < 4000 nm, stellen somit die oben beschriebenen intrapartikulären Poren dar (Abbildung 5 und 7), während die gemessenen Poren mit Durchmessern insbesondere > 4000 nm als interpartikuläre Poren interpretiert werden können (resultierend aus dem Zwickelvolumen der Sekundärpartikel).
Durch die erfindungsgemäße Behandlung der Sekundärpartikel mit Eisenpentacarbonyl gelingt es, die Zwickelporen zwischen den sphärischen Primärpartikeln, insbesondere mit Durchmessern im Bereich < 4000 nm, zu verfüllen. Man erhält somit überwiegend poren- und hohlraumfreie Sekundärpartikel, die besonders dadurch gekennzeichnet sind, dass das differentielle Porenvolumen mit Porendurchmessern im Bereich < 4000 nm zu < 10 %, in besonderer Ausführung zu < 5 %, zu dem gemessenen integralen Porenvolumen der Sekundärpartikel beiträgt.
Die Menge an Eisenpentacarbonyl, die zur Verfüllung der Poren mit einem Durchmesser insbesondere von < 4000 nm notwendig ist, wird bevorzugt mittels Porenvolumenmessung per Quecksilber Porosimetrie (DIN 66133) bestimmt.

Im Schritt IV erhaltene Partikel sind beispielhaft in Abbildung 6 zu sehen.

Bereits ohne jegliche Zusätze zeigt der erfindungsgemäße eisenhaltige Heterogenkatalysator eine vorteilhafte katalytische Wirkung.

In einer besonderen Ausgestaltung erfolgt bei der Katalysatorherstellung ein zusätzlicher Schritt V, in dem die Partikel aus Schritt IV zur Steigerung der katalytischen Wirkung mit einem Promotor oder mehreren Promotoren dotiert werden.

Promotoren in Eisenkatalysatoren für Fischer-Tropsch-Synthesen sind z. B. beschrieben in M. Janardanarao, Ind. Eng. Chem. Res. 1990, 29, Seiten 1735 bis 1753, oder C.D. Frohning et al. in "Chemierohstoffe aus Kohle", 1977, Seiten 219 bis 299.

Als geeignete Promotoren kann der Katalysator z. B. eines oder mehrere der Elemente Kalium, Vanadium, Kupfer, Nickel, Kobalt, Mangan, Chrom, Zink, Silber, Gold, Calcium, Natrium, Lithium, Caesium, Platin, Palladium, Ruthenium, Schwefel, jeweils in elementarer Form (Oxidationsstufe = 0) oder in ionischer Form (Oxidationsstufe * 0), enthalten.

Die Dotierung beträgt insgesamt (d. h. in Summe, wenn mehrere Promotoren) bevorzugt im Bereich von 0,01 bis 30 Gew.-%, besonders bevorzugt 0,01 bis 20 Gew.-%, ganz besonders bevorzugt 0,1 bis 15 Gew.-%, z. B. 0,2 bis 10 Gew.-%, besonders 0,3 bis 8 Gew.-%, (jeweils als Element in der Oxidationsstufe 0 berechnet und jeweils auf Eisen bezogen).

In einer besonderen Ausgestaltung des erfindungsgemäßen Verfahrens erfolgt in Schritt V eine Dotierung mit Kaliumionen und/oder Natriumionen als Promotor.

In einer weiteren besonderen Ausgestaltung des erfindungsgemäßen Verfahrens erfolgt in Schritt V, insbesondere zusätzlich zu einer Dotierung mit Kaliumionen und/oder Natriumionen, eine Dotierung mit Mangan und/oder Kupfer, jeweils in elementarer Form oder in ionischer Form.

Besonders bevorzugt wird in Schritt V mit insgesamt im Bereich von 0,01 bis 10 Gew.-%, bevorzugt 0,1 bis 5 Gew.-%, Kaliumionen und/oder Natriumionen (jeweils als Element in der Oxidationsstufe 0 berechnet und jeweils auf Eisen bezogen) dotiert. Besonders bevorzugt wird in Schritt V mit insgesamt im Bereich von 0,01 bis 10 Gew.-%, bevorzugt 0,1 bis 5 Gew.-%, Mangan- und/oder Kupfer (jeweils als Element in der Oxidationsstufe 0 berechnet und jeweils auf Eisen bezogen) dotiert.

Das Aufbringen der genannten Promotoren kann insbesondere durch Imprägnierung der Partikel mit wässrigen Salzlösungen der genannten Metalle, vorzugsweise Carbonaten, Acetaten, Chloriden, Nitraten oder Oxiden, erfolgen.

In einer besonderen Ausführungsform können den wässrigen Salzlösungen Verbindungen zugesetzt werden, die die Oberflächenspannung der Tränklösung herabsetzen, wie z.B. Tenside.

Weiterhin können die als Promotor wirkenden Elemente durch thermische Zersetzung der entsprechenden gasförmigen Carbonylverbindungen, z. B. Chrom-, Cobalt-, Mangan- oder Nickelcarbonyle, aufgebracht werden.

Der erfindungsgemäße Katalysator ist besonders bevorzugt nicht auf einem Trägermaterial aufgebracht.

Im erfindungsgemäßen Verfahren kann der, ggf. dotierte, eisenhaltige Heterogenkatalysator in Form von Pellets eingesetzt werden.

Die Pellets werden durch dem Fachmann bekannte Methoden erhalten. Bevorzugte Formen der Pellets sind Tabletten und Ringe.

Die Pellets können vor ihrem Einsatz im erfindungsgemäßen Verfahren auch wieder zerkleinert werden, z. B. durch Mahlung.

Der Katalysator kann vor seinem Einsatz im erfindungsgemäßen Verfahren durch Behandlung mit Wasserstoff und/oder Kohlenmonoxid bei erhöhter Temperatur, insbesondere bei Temperaturen oberhalb von 300 °C, in einen syntheseaktiveren Zustand überführt werden. Diese zusätzliche Aktivierung ist jedoch nicht unbedingt erforderlich.

Im erfindungsgemäßen Verfahren werden die Edukte Kohlenmonoxid und Wasserstoff bevorzugt in Form von Synthesegas eingesetzt.

Das Synthesegas kann nach allgemein bekannten Verfahren (wie z. B. beschrieben in Weissermel et al., Industrial Organic Chemistry, Wiley-VCH, Weinheim, 2003, Seiten 15 bis 24), wie beispielsweise durch Umsetzung von Kohle oder Methan mit Wasserdampf, oder durch partielle Oxidation von Methan hergestellt werden. Vorzugsweise weist das Synthesegas ein Molverhältnis von Kohlenmonoxid zu Wasserstoff im Bereich von 3 : 1 bis 1 : 3 auf. Besonders bevorzugt wird ein Synthesegas eingesetzt, das ein Mischungs-Molverhältnis von Kohlenmonoxid zu Wasserstoff im Bereich von 2 : 1 bis 1 : 2 aufweist.

In einer besonderen Ausführungsform des erfindungsgemäßen Verfahrens enthält das Synthesegas Kohlendioxid (CO₂). Der Gehalt an CO₂ liegt bevorzugt im Bereich von 1 bis 50 Gew.-%.

Das erfindungsgemäße Verfahren wird bevorzugt bei einer Temperatur im Bereich von 200 bis 500 °C, besonders 300 bis 400 °C, durchgeführt.

Der Absolutdruck liegt bevorzugt im Bereich von 1 bis 100 bar, besonders 5 bis 50 bar.

Die WHSV (Weight Hourly Space Velocity) liegt bevorzugt im Bereich von 50 bis 10000, besonders bevorzugt 150 bis 5000, Volumenteile Feed-Strom pro Masseanteil Katalysator und Stunde (l/kg•h).

Bevorzugte Reaktoren zur Durchführung des erfindungsgemäßen Verfahrens sind: Wirbelschichtreaktor, Festbettreaktor, Suspensionsreaktor, Mikroreaktor.

Im Wirbelschicht-, Mikro- und Suspensionsreaktor wird der Katalysator bevorzugt in Pulverform eingesetzt.

Das Pulver kann auch erhalten werden durch Mahlung von zuvor hergestellten Pellets.

Im Festbettreaktor wird der Katalysator als Formkörper, bevorzugt in Form von Pellets, eingesetzt.

Der Einsatz solcher Reaktoren für die Fischer-Tropsch-Synthese ist z. B. beschrieben in C.D. Frohning et al. in "Chemierohstoffe aus Kohle", 1977, Seiten 219 bis 299, oder B.H. Davis, Topics in Catalysis, 2005, 32 (3-4), Seiten 143 bis 168.

Das erfindungsgemäße Verfahren liefert ein Produktgemisch enthaltend Olefine mit einer Olefin-Kohlenstoff-Selektivität, insbesondere einer α-Olefin-Kohlenstoff-Selektivität, für den C2-C4 - Bereich von bevorzugt mindestens 20 %, z. B. im Bereich von 20 bis 30 %. Bei der Selektivitätsangabe wird gebildetes Kohlendioxid nicht berücksichtigt (d.h. exklusive CO₂).

In einer besonderen Ausführungsform erhält man ein Produktgemisch enthaltend Olefine mit einer Olefin-Kohlenstoff-Selektivität für den C2-C4 - Bereich von mindestens 20 %, z. B. im Bereich von 20 bis 30 %, wobei von diesen mindestens 20 % wiederum mindestens 90 % auf Ethen, Propen, 1-Buten entfallen. Bei der Selektivitätsangabe wird gebildetes Kohlendioxid nicht berücksichtigt (d.h. exklusive CO₂).

In einer besonders bevorzugten Ausführungsform erhält man ein Produktgemisch enthaltend Olefine mit einer Olefin-Kohlenstoff-Selektivität für den C2-C4 - Bereich von mindestens 25 %, z. B. im Bereich von 25 bis 30 %, wobei von diesen mindestens 25 % wiederum mindestens 90 % auf Ethen, Propen, 1-Buten entfallen. Bei der Selektivitätsangabe wird gebildetes Kohlendioxid nicht berücksichtigt (d.h. exklusive CO₂).

Die erhaltenen Olefine werden z. B. in Verfahren zur Herstellung von Polyolefinen, Epoxiden, Oxoprodukten, Acrylnitrilen, Acrolein, Styrol eingesetzt. Siehe auch: Weissermel et al., Industrial Organic Chemistry, Wiley-VCH, Weinheim, 2003, Seiten 145 bis 192 und 267 bis 312.

Alle Druckangaben beziehen sich auf den Absolutdruck.

### Beispiele

### Katalysatorherstellung

### Beispiel 1 (erfindungsgemäß)

Porenverfüllung von reinem, agglomeriertem Carbonyleisenpulver (Sekundärpartikel) aus Schritt II mit Eisenpentacarbonyl gemäß Schritt III und IV.
Die Menge an Eisenpentacarbonyl, die zur Verfüllung der Poren mit einem Durchmesser von insbesondere < 4000 nm notwendig ist, wurde mittels Quecksilber Porosimetrie (DIN 66133) bestimmt.

200 ml Carbonyleisenmaterial mit einer Korngrößenverteilung der Sekundärpartikel derart, dass 90 Gew.-% einen Durchmesser im Bereich von 50 bis 100 µm aufweisen, siehe Abbildung 4, wurde ausgehend von Carbonyleisenpulver Typ CN, BASF AG bzw. jetzt BASF SE, durch Behandlung mit Wasserstoff bei mindestens 300 °C hergestellt. Das Carbonyleisenmaterial wurde in einem Rührgefäß unter Argonatmosphäre bei 105 °C für 5 h getrocknet. Danach wurden 10 ml Eisenpentacarbonyl zudosiert. Anschließend wurde das Gefäß auf ca. 165 °C Innentemperatur erwärmt. Die Zersetzung erfolgte bei 165 °C unter Rühren der Partikel. Die Reaktion war beendet, wenn im Abgasstrom kein Eisenpentacarbonyl bzw. kein freies Kohlenmonoxid detektiert wurde. Diese Schritte wurden 13 mal wiederholt. Nach beendeter Synthese wurde das Produkt mindestens 12 h mit Argon bei 100 °C gespült, bis der CO- bzw. Fe(CO)₅-Gehalt im Abgas < 0,1 Vol.-ppm betrug.

### Beispiel 2 (erfindungsgemäß)

Herstellung von K- und Cu-dotiertem, verfülltem Carbonyleisenkatalysator durch Imprägnierung des Katalysators aus Beispiel 1

50 g Katalysator wurden wie in Beispiel 1 beschrieben hergestellt und unter Umgebungsbedingungen (Raumtemperatur, Normaldruck) mit 5,5 ml wässriger Kalium- / Kupfernitratlösung getränkt. Die wässrige Kalium- / Kupfernitratlösung wurde durch Auflösen von 1,93 g Kupfernitrat Trihydrat (> 99,5 %, Merck) und 0,26 g Kaliumnitrat (99 %, Riedel de Haen) in 5,5 ml entmineralisiertem Wasser hergestellt. Der getränkte Katalysator wurde 4 h bei 120 °C getrocknet. Der erhaltene Katalysator enthielt 0,18 Gew.-% K und 0,88 Gew.-% Cu.

### Beispiel 3 (Vergleichskatalysator)

Carbonyleisenmaterial mit einer Korngrößenverteilung der Sekundärpartikel derart, dass 90 Gew.-% einen Durchmesser im Bereich von 50 bis 100 µm aufweisen, siehe Abbildung 4, hergestellt wie in Beispiel 1 beschrieben. Dieses Material wurde nicht mit Eisenpentacarbonyl nachbehandelt.

Performance der erfindungsgemäßen Katalysatoren (Beispiele 1, 2) und des Vergleichskatalysators (Beispiel 3) im erfindungsgemäßen Verfahren mit vorheriger identischer Aktivierung

### Beispiel 4

Es wurde eine Reihe von vergleichenden Leistungstests mit je etwa 2,0 g Katalysator aus den Beispielen 1, 2 und 3 und Inertmaterialverdünnung (Katalysator: alpha-Aluminiumoxid = 1 : 3 (Gewichtsverhältnis)) durchgeführt. Die Katalysatoren wurden in einen Festbettreaktor eingetragen und direkt mit Synthesegas (H₂:CO = 1:0,9 (molar)) mit einer Rate von ungefähr 2,1 NI/h bei 25 bar in dem Reaktor bei 340 °C angefahren. Als interner Standard für die online-GC-Analyse wurde zusätzlich 0,1 NI/h Stickstoffgas eingeleitet. Die Ergebnisse der über einen Zeitraum von mindestens 100 h durchgeführten Versuche sind nachstehend für die jeweiligen Katalysatorsysteme gezeigt. (NI = Normliter = auf Normalbedingungen umgerechnetes Volumen).

| Katalysator | Beispiel 1 | Beispiel 2 | Beispiel 3 |
|---|---|---|---|
| % max. CO-Umsatz | 98 | 98 | 98 |
| Zeit bis Umsatz > 95 % [h] | 35 | 6 | 56 |
| % Kohlenstoff in C₇₊ | 30 | 28 | 36 |
| % Kohlenstoff in Koks, ohne CO₂ | 13 | 8 | 18 |

Bei den Selektivitätsangaben in den Beispielen wird gebildetes Kohlendioxid nicht berücksichtigt (d.h. ohne CO₂).

Die in der Tabelle dargestellten Messwerte des Beispieles 4 verdeutlichen, dass durch die Verfüllung der Poren < 4000 nm in den Sekundärpartikeln mit Eisenpentacarbonyl (Beispiel 1) die gewünschten Besserstellungen gegenüber dem Vergleichskatalysator (Beispiel 3) erzielt werden. So geht sowohl die Bildung langkettiger Kohlenwasserstoffe (C7+), als auch die Bildung von Koks deutlich zurück.
Durch eine Nachimprägnierung mit K/Cu-Salzen (Katalysator aus Beispiel 2) kann zusätzlich die Aktivität deutlich gesteigert werden.

Zur Analytik der Reaktionsprodukte:
Die Produktströme wurden über beheizte Streamselektoren und Leitungen nach Auskondensieren der langkettigen Kohlenwasserstoffe in einem Heißabscheider (ca. 160°C, 25 bar) beprobt und einem online-Gaschromatograph (GC) zugeführt.
GC: Agilent 6890N mit FID und WLD Detektor.
Vorsäulen: CP-Poraplot Q, Länge 12,5 m, ID 0,53 mm, Filmdicke 20 µm FID:
Injektor 250 °C, Splitverhältnis 50:1, Trägergas Helium, Säule Durabond DB-1 (Länge 60 m, ID 0,32 mm, Filmdicke 3 µm), Detektor 280 °C.
WLD:
   Injektor 200 °C, Splitverhältnis 10:1, Trägergas Argon, Säule Carboxen 1010 (Länge 30 m, ID 0,53 mm), Detektor 210 °C.
   Temperaturprogramm: 40 °C-5 min - 7 °C/min - 250 °C-5 min, Trägergas, Helium.

Abbildungen 1 bis 3:
Erfindungsgemäß in Schritt II einsetzbares Carbonyleisenpulver (CEP) mit sphärischen Primärpartikeln

## Patentansprüche

1. Verfahren zur Herstellung eines eisenhaltigen Heterogenkatalysators, **dadurch gekennzeichnet, dass** es folgende Schritte umfasst:
I. Thermische Zersetzung von gasförmigem Eisenpentacarbonyl unter Erhalt von Carbonyleisenpulver mit sphärischen Primärpartikeln,
II. Behandlung von in Schritt I erhaltenem Carbonyleisenpulver mit Wasserstoff, wobei die metallischen sphärischen Primärpartikel zumindest teilweise agglomerieren,
III. In-Kontakt-bringen der Agglomerate (= Sekundärpartikel) mit Eisenpentacarbonyl,
IV. Thermische Zersetzung des in Schritt III aufgebrachten Eisenpentacarbonyls unter Erhalt von zumindest überwiegend poren- und hohlraumfreien Sekundärpartikeln.

2. Verfahren nach Anspruch 1, **dadurch gekennzeichnet, dass** in Schritt III die Agglomerate mit flüssigem oder gasförmigem Eisenpentacarbonyl in Kontakt gebracht werden.

3. Verfahren nach einem der beiden vorhergehenden Ansprüche, **dadurch gekennzeichnet, dass** in Schritt IV die thermische Zersetzung des Eisenpentacarbonyls bei einer Temperatur im Bereich von 150 bis 350 °C erfolgt.

4. Verfahren nach einem der vorhergehenden Ansprüche, **dadurch gekennzeichnet, dass** die im Schritt I erhaltenen sphärischen Primärpartikel einen Durchmesser im Bereich von 0,01 bis 50 µm aufweisen.

5. Verfahren nach einem der vorhergehenden Ansprüche, **dadurch gekennzeichnet, dass** die im Schritt I erhaltenen Primärpartikel einen Eisengehalt von größer als 97 Gew.-% aufweisen.

6. Verfahren nach einem der vorhergehenden Ansprüche, **dadurch gekennzeichnet, dass** die im Schritt I erhaltenen Primärpartikel porenfrei sind.

7. Verfahren nach einem der vorhergehenden Ansprüche, **dadurch gekennzeichnet, dass** das im Schritt I erhaltene Carbonyleisenpulver keine fadenförmigen Primärpartikel enthält.

8. Verfahren nach einem der vorhergehenden Ansprüche, **dadurch gekennzeichnet, dass** es zusätzlich folgenden Schritt umfasst:
V. Dotierung der Sekundärpartikel aus Schritt IV mit den Elementen Kalium, Vanadium, Kupfer, Nickel, Kobalt, Mangan, Chrom, Zink, Silber, Gold, Calcium, Natrium, Lithium, Caesium, Platin, Palladium, Ruthenium und/oder Schwefel, jeweils in elementarer Form oder in ionischer Form.

9. Verfahren nach dem vorhergehenden Anspruch, **dadurch gekennzeichnet, dass** die Dotierung insgesamt im Bereich von 0,01 bis 30 Gew.-% (bezogen auf Eisen) beträgt.

10. Verfahren nach einem der beiden vorhergehenden Ansprüche, **dadurch gekennzeichnet, dass** in Schritt V eine Dotierung mit insgesamt im Bereich von 0,01 bis 10 Gew.-% (bezogen auf Eisen) Kaliumionen und/oder Natriumionen erfolgt.

11. Verfahren nach einem der drei vorhergehenden Ansprüche, **dadurch gekennzeichnet, dass** das in Schritt V eine Dotierung mit insgesamt im Bereich von 0,01 bis 10 Gew.-% (bezogen auf Eisen) Mangan und/oder Kupfer, jeweils in elementarer Form oder in ionischer Form, erfolgt.

12. Verfahren nach einem der vorhergehenden Ansprüche, **dadurch gekennzeichnet, dass** die in Schritt III eingesetzten Sekundärpartikel einen Durchmesser im Bereich von 10 bis 250 µm aufweisen.

13. Eisenhaltiger Heterogenkatalysator, erhältlich durch ein Verfahren nach einem der vorhergehenden Ansprüche.

14. Verfahren zur Herstellung von Olefinen durch Umsetzung von Kohlenmonoxid mit Wasserstoff in Gegenwart eines Katalysators, **dadurch gekennzeichnet, dass** man als Katalysator einen eisenhaltigen Heterogenkatalysator gemäß dem vorhergehenden Anspruch einsetzt.

15. Verfahren nach dem vorhergehenden Anspruch, **dadurch gekennzeichnet, dass** man die Umsetzung bei einer Temperatur im Bereich von 200 bis 500 °C durchführt.

16. Verfahren nach einem der beiden vorhergehenden Ansprüche, **dadurch gekennzeichnet, dass** man die Umsetzung bei einem Absolutdruck im Bereich von 1 bis 100 bar durchführt.

17. Verfahren nach einem der drei vorhergehenden Ansprüche zur Herstellung von C2-C4-Olefinen.

18. Verfahren nach einem der vier vorhergehenden Ansprüche, **dadurch gekennzeichnet, dass** für die Umsetzung Kohlenmonoxid und Wasserstoff im Form von Synthesegas eingesetzt werden.

19. Verfahren nach einem der fünf vorhergehenden Ansprüche, **dadurch gekennzeichnet, dass** Kohlenmonoxid und Wasserstoff in einem Molverhältnis im Bereich von 2 : 1 bis 1 : 2 eingesetzt werden.

20. Verfahren nach einem der beiden vorhergehenden Ansprüche, **dadurch gekennzeichnet, dass** das Synthesegas Kohlendioxid (CO₂) enthält.

## Claims

1. A process for producing an iron-comprising heterogeneous catalyst, which comprises the following steps:
I. thermal decomposition of gaseous iron pentacarbonyl to give carbonyl iron powder having spherical primary particles,
II. treatment of carbonyl iron powder obtained in step I with hydrogen, resulting in the metallic spherical primary particles at least partially agglomerating,
III. contacting of the agglomerates (= secondary particles) with iron pentacarbonyl,
IV. thermal decomposition of the iron pentacarbonyl applied in step III to give at least predominantly pore- and void-free secondary particles.

2. The process according to claim 1, wherein the agglomerates are brought into contact with liquid or gaseous iron pentacarbonyl in step III.

3. The process according to either of the two preceding claims, wherein the thermal decomposition of the iron pentacarbonyl in step IV is carried out at a temperature in the range from 150 to 350°C.

4. The process according to any of the preceding claims, wherein the spherical primary particles obtained in step I have a diameter in the range from 0.01 to 50 µm.

5. The process according to any of the preceding claims, wherein the primary particles obtained in step I have an iron content of greater than 97% by weight.

6. The process according to any of the preceding claims, wherein the primary particles obtained in step I are pore-free.

7. The process according to any of the preceding claims, wherein the carbonyl iron powder obtained in step I does not comprise any thread-like primary particles.

8. The process according to any of the preceding claims, which further comprises the following step:
V. doping of the secondary particles from step IV with the elements potassium, vanadium, copper, nickel, cobalt, manganese, chromium, zinc, silver, gold, calcium, sodium, lithium, cesium, platinum, palladium, ruthenium and/or sulfur, in each case in elemental form or in ionic form.

9. The process according to the preceding claim, wherein the total doping is in the range from 0.01 to 30% by weight (based on iron).

10. The process according to either of the two preceding claims, wherein doping with a total in the range from 0.01 to 10% by weight (based on iron) of potassium ions and/or sodium ions is carried out in step V.

11. The process according to any of the three preceding claims, wherein doping with a total in the range from 0.01 to 10% by weight (based on iron) of manganese and/or copper, in each case in elemental form or in ionic form, is carried out in step V.

12. The process according to any of the preceding claims, wherein the secondary particles used in step III have a diameter in the range from 10 to 250 µm.

13. An iron-comprising heterogeneous catalyst which can be obtained by a process according to any of the preceding claims.

14. A process for preparing olefins by reaction of carbon monoxide with hydrogen in the presence of a catalyst, wherein an iron-comprising heterogeneous catalyst according to the preceding claim is used as catalyst.

15. The process according to the preceding claim, wherein the reaction is carried out at a temperature in the range from 200 to 500°C.

16. The process according to either of the two preceding claims, wherein the reaction is carried out at an absolute pressure in the range from 1 to 100 bar.

17. The process according to any of the three preceding claims for preparing C2-C4-olefins.

18. The process according to any of the four preceding claims, wherein carbon monoxide and hydrogen are used in the form of synthesis gas for the reaction.

19. The process according to any of the five preceding claims, wherein carbon monoxide and hydrogen are used in a molar ratio in the range from 2 : 1 to 1 : 2.

20. The process according to either of the two preceding claims, wherein the synthesis gas comprises carbon dioxide (CO₂).

## Revendications

1. Procédé de fabrication d'un catalyseur hétérogène contenant du fer, **caractérisé en ce qu'**il comprend les étapes suivantes :
I. la décomposition thermique de pentacarbonyle de fer gazeux pour obtenir une poudre de carbonyle de fer à particules primaires sphériques,
II. le traitement de la poudre de carbonyle de fer obtenue à l'étape I avec de l'hydrogène, les particules primaires sphériques métalliques étant au moins partiellement agglomérées,
III. la mise en contact des agglomérats (= particules secondaires) avec du pentacarbonyle de fer,
IV. la décomposition thermique du pentacarbonyle de fer appliqué à l'étape III pour obtenir des particules secondaires au moins essentiellement exemptes de pores et de cavités.

2. Procédé selon la revendication 1, **caractérisé en ce qu'**à l'étape III, les agglomérats sont mis en contact avec du pentacarbonyle de fer liquide ou gazeux.

3. Procédé selon l'une quelconque des deux revendications précédentes, **caractérisé en ce qu'**à l'étape IV, la décomposition thermique du pentacarbonyle de fer a lieu à une température dans la plage allant de 150 à 350 °C.

4. Procédé selon l'une quelconque des revendications précédentes, **caractérisé en ce que** les particules primaires sphériques obtenues à l'étape I présentent un diamètre dans la plage allant de 0,01 à 50 µm.

5. Procédé selon l'une quelconque des revendications précédentes, **caractérisé en ce que** les particules primaires obtenues à l'étape I présentent une teneur en fer supérieure à 97 % en poids.

6. Procédé selon l'une quelconque des revendications précédentes, **caractérisé en ce que** les particules primaires obtenues à l'étape I sont exemptes de pores.

7. Procédé selon l'une quelconque des revendications précédentes, **caractérisé en ce que** la poudre de carbonyle de fer obtenue à l'étape I ne contient pas de particules primaires filamentaires.

8. Procédé selon l'une quelconque des revendications précédentes, **caractérisé en ce qu'**il comprend en outre l'étape suivante :
V. le dopage des particules secondaires de l'étape IV avec les éléments potassium, vanadium, cuivre, nickel, cobalt, manganèse, chrome, zinc, argent, or, calcium, sodium, lithium, césium, platine, palladium, ruthénium et/ou soufre, à chaque fois sous forme élémentaire ou sous forme ionique.

9. Procédé selon la revendication précédente, **caractérisé en ce que** le dopage est au total dans la plage allant de 0,01 à 30 % en poids (par rapport au fer).

10. Procédé selon l'une quelconque des deux revendications précédentes, **caractérisé en ce qu'**un dopage avec au total dans la plage allant de 0,01 à 10 % en poids (par rapport au fer) d'ions potassium et/ou d'ions sodium a lieu à l'étape V.

11. Procédé selon l'une quelconque des trois revendications précédentes, **caractérisé en ce qu'**un dopage avec au total dans la plage allant de 0,01 à 10 % en poids (par rapport au fer) de manganèse et/ou de cuivre, à chaque fois sous forme élémentaire ou sous forme ionique, a lieu à l'étape V.

12. Procédé selon l'une quelconque des revendications précédentes, **caractérisé en ce que** les particules secondaires utilisées à l'étape III présentent un diamètre dans la plage allant de 10 à 250 µm.

13. Catalyseur hétérogène contenant du fer, pouvant être obtenu par un procédé selon l'une quelconque des revendications précédentes.

14. Procédé de fabrication d'oléfines par mise en réaction de monoxyde de carbone avec de l'hydrogène en présence d'un catalyseur, **caractérisé en ce qu'**un catalyseur hétérogène contenant du fer selon la revendication précédente est utilisé en tant que catalyseur.

15. Procédé selon la revendication précédente, **caractérisé en ce que** la réaction est réalisée à une température dans la plage allant de 200 à 500 °C.

16. Procédé selon l'une quelconque des deux revendications précédentes, **caractérisé en ce que** la réaction est réalisée à une pression absolue dans la plage allant de 1 à 100 bar.

17. Procédé selon l'une quelconque des trois revendications précédentes, pour la fabrication d'oléfines en C2-C4.

18. Procédé selon l'une quelconque des quatre revendications précédentes, **caractérisé en ce que** du monoxyde de carbone et de l'hydrogène sous la forme d'un gaz de synthèse sont utilisés pour la réaction.

19. Procédé selon l'une quelconque des cinq revendications précédentes, **caractérisé en ce que** le monoxyde de carbone et l'hydrogène sont utilisés en un rapport molaire dans la plage allant de 2:1 à 1:2.

20. Procédé selon l'une quelconque des deux revendications précédentes, **caractérisé en ce que** le gaz de synthèse contient du dioxyde de carbone (CO₂).
